# EUROPEAN PATENT SPECIFICATION

(11) **EP 3 671 782 B1**
(45) Date of publication and mention of the grant of the patent: **18.05.2022**
(21) Application number: 18213813.1
(22) Date of filing: 19.12.2018
(51) Int. Cl.: H01G 11/06, H01G 11/26, H01G 11/36, H01G 11/50, H01M 4/133, H01M 4/137, H01M 4/62, H01M 4/66, H01M 4/90, H01G 11/52, H01G 11/56, H01M 50/46

(54) **ENERGY STORAGE DEVICE, AIRCRAFT, AND METHOD FOR MANUFACTURING AN ENERGY STORAGE DEVICE**
ENERGIESPEICHERVORRICHTUNG, FLUGZEUG UND VERFAHREN ZUR HERSTELLUNG EINER ENERGIESPEICHERVORRICHTUNG
DISPOSITIF DE STOCKAGE D'ÉNERGIE, AÉRONEF ET PROCÉDÉ DE FABRICATION D'UN DISPOSITIF DE STOCKAGE D'ÉNERGIE

(43) Date of publication of application: 24.06.2020
(73) Proprietor: Airbus Operations GmbH, 21129 Hamburg (DE)
(72) Inventor: LINDE, Peter, 21129 Hamburg (DE); WARDLE, Brian, 21129 Hamburg (DE)
(74) Representative: Isarpatent

(56) References cited:
- US-A1- 2007 202 403
- US-A1- 2011 304 964
- US-A1- 2012 121 986
- US-A1- 2015 162 140

## Description

### FIELD OF THE INVENTION

The present invention pertains to an energy storage device for storing electrical energy, an aircraft, and a method for manufacturing an energy storage device.

Although applicable for any kind of application where electrical energy is required, in particular mobile or vehicle applications, the present invention and the corresponding underlying problems will be explained in further detail in conjunction with an aircraft.

### BACKGROUND OF THE INVENTION

Energy storage devices for storing electrical energy or rechargeable electric batteries become more and more important in mobility applications such as cars, bikes, ships, or aircrafts. Typically, for a specific application, a compromise between charging/discharging performance of the energy storage device and weight has to be found. One attempt to save weight is to integrate the storage device into a mechanical structure of the apparatus or system where it is used. One example for such structural energy storage devices are composite batteries comprising carbon fiber reinforced electrode layers that are separated by a separator layer. Typically, in this type of batteries, the fibers are embedded in an electrolytic polymer matrix material and the carbon fibers of the electrode layer that forms the cathode is enriched with Lithium (Li) ions.

Since composite batteries employ an electrolyte that is in a solid state, power ions must travel through the micro structure of the electrolyte. In order to improve power density of an energy storage device, that is, the rate at which energy can be accumulated or discharged, US 8 659 874 B2 describes an energy storage device realized as a supercapacitor which comprises electrode mats being separated by a glass fiber mat. The electrode mats comprise carbon fibers which are encased in an ion conductive resin, wherein carbon nanotubes (CNTs) may be attached to a surface of the fibers in an approximately radial arrangement so as to at least partially surround the fibers.

### SUMMARY OF THE INVENTION

It is one of the ideas of the invention to increase power density of an electrical energy storage device, in particular to decrease charging time of the electrical energy storage device.

According to a first aspect of the invention, an energy storage device for storing electrical energy is provided. The energy storage device comprises a cathode layer comprising at least one ply of carbon fibers, the carbon fibers being coated with a Lithium(Li)-ion containing coating and embedded in an electrolytic polymer matrix material. The Li-ion coating may be a lithium metal oxide or phosphate, for example LiFePO₄ or LiMnO₂. The energy storage device further comprises an anode layer comprising at least one ply of carbon fibers, the carbon fibers being embedded in an electrolytic polymer matrix material, and a separator layer comprising at least one ply of fibers, in particular electrically insulating fibers, the fibers being embedded in an electrolytic polymer matrix material, wherein the separator layer is sandwiched between the cathode layer and the anode layer. The energy storage device further comprises carbon nanotubes extending between and partly into the separator layer and the cathode layer, or extending between and partly into the separator layer and the anode layer, or extending between and partly into the separator layer and the cathode layer and extending between and partly into the separator layer and the anode layer.

According to a second aspect of the invention, an aircraft is provided comprising an electrical energy storage device according to the first aspect of the invention.

According to a third aspect of the invention, a method for manufacturing an energy storage device, for example an electrical energy storage device according to the first aspect of the invention, comprises providing a cathode layer comprising at least one ply of carbon fibers, the carbon fibers of the cathode layer being coated with a Li-ion containing coating and embedded in an electrolytic polymer matrix material, an anode layer comprising at least one ply of carbon fibers, the carbon fibers of the anode layer being embedded in an electrolytic polymer matrix material, and a separator layer comprising at least one ply of fibers, the fibers of the separator layer being embedded in an electrolytic polymer matrix material. The method further comprises applying a carrier liquid containing equally oriented carbon nanotubes to a contact surface of one of the anode layer, the cathode layer, and the separator layer, forming a layered structure, wherein the separator layer is sandwiched between the cathode layer and the anode layer, wherein the contact surface contacts the separator layer with the anode layer or contacts separator layer with the cathode layer, and wherein the carbon nanotubes extend between and partly into the separator layer and the anode layer or the separator layer and the cathode layer. In a further step, the electrolytic polymer matrix material of the layers is cured.

One idea of the present invention is to provide carbon nanotubes, CNTs, extending between and at least partly penetrating into neighbouring layers of a composite energy storage device. In particular, the CNTs penetrate into both of two neighbouring layers, for example into the separator layer and the cathode layer or into the separator layer and the anode layer. The matrix material of the separator layer, the cathode layer, and the anode layer may form a monolithic structure, wherein the CNTs are arranged to extend over at least a part of a distance between neighbouring fiber plies of the separator layer and the cathode layer, or the separator layer and the anode layer, or the separator layer and the cathode layer and the separator layer and the anode layer.

A great advantage of this providing the CNTs so as to partly extend into neighbouring layers is that the micro structure of the polymer matrix material at least in the region around the CNTs is influenced to form a more ordered structure. In particular, this may include rectification of travel paths along which the Li-ions travel through the electrolytic polymer matrix material between the anode and the cathode. Hence, the CNTs that penetrate into the layers lead to a more direct travel path for the Li-ions through the electrolyte with less obstacles. This results in faster ion transmission between the electrodes formed by the anode and cathode layers, whereby in particular recharging of the energy storage device is accelerated.

A further advantage may be seen in that the CNTs further improve mechanical strength of the energy storage device since they penetrate into neighbouring layers and thereby prevent delamination. This is particular useful in aerospace applications where high mechanical reliability and low weight are advantageous.

The method according to the third aspect of the invention allows for simple and efficient manufacturing of the energy storage device. One ideas of the method is to depose the CNTs at a surface of one of the layers that shall be contacted with another layer of the energy storage device by applying a carrier liquid to the surface, wherein the carrier liquid contains the CNTs in an oriented manner. The carrier liquid contains an aqueous solvent and CNTs. Thereby, the CNTs can be evenly distributed over the areal expanse or spatial extension of the layer in an efficient manner. For example, a carrier liquid containing a so called VANTA ("vertically aligned nanotube arrays") may be employed. According to some embodiments, the CNTs may be dispersed in the carrier liquid, that is, the CNTs may be present in the liquid as colloids. According to some further embodiments, the CNTs may be solubilized in the carrier liquid. In some embodiments, the carrier liquid may comprise organic solvents and/or water. During forming of the layered structure, one or more of the cathode layer, the anode layer, and the separator layer may be in a non-cured or only partly cured state which eases introducing the CNTs into the layers, while curing at a later point of time helps to evaporate aqueous parts of the carrier liquid.

According to an embodiment of the energy storage device, the nanotubes may extend into in a side region of the anode layer or the cathode layer, wherein the side region is devoid of fibers. Each of the anode layer, the cathode layer, and the separator layer may comprise a fiber rich core region and matrix rich side regions, wherein the core region is arranged between the side regions with respect to a thickness direction of the layer. The CNTs may penetrate into the side region of the anode layer or the cathode layer by a length so as to end within the side region.

This may also include that an end region of a CNT contacts or overlaps a carbon fiber of the anode layer or the cathode layer. Consequently, the CNTs are prevented from penetrating too far into the anode layer or the cathode layer which advantageously avoids buckling or breaking of the CNTs.

According to a further embodiment of the energy storage device, the carbon nanotubes extend into a side region of the separator layer, wherein the side region is devoid of fibers or lacking fibers. Also the separator layer may comprise a fiber rich core region and matrix rich side regions, wherein the core region is arranged between the side regions with respect to a thickness direction of the layer. Similar as in above described embodiment, the CNTs are prevented from penetrating too far into the anode layer or the cathode layer which advantageously avoids buckling or breaking of the CNTs.

According to a further embodiment of the energy storage device, the carbon nanotubes may be oriented transverse to the separator layer. That is, the CNTs are oriented along the direction of travel of the Li-ions, namely transverse or perpendicular to an areal expanse of the anode layer and the cathode layer. Thereby, the power density of the energy storage device may be further increased.

According to an embodiment of the energy storage device, the carbon nanotubes may be oriented along one another. In particular, the CNTs may be arranged in the form of a so called VANTA which is an abbreviation of the term "vertically aligned nanotube array". By this substantially parallel alignment of the CNTs, a particulary efficient formation of straight travel paths for the Li-ions in the electrolytic polymer matrix material has been occupied. Thus, the power density of the energy storage device may be further increased.

According to a further embodiment of the energy storage device, the fibers of the separator layer may include glass fibers. Glass fibers provide for good mechanical properties and reliable electrical isolation between the anode and cathode layers while allowing efficient ion transport.

According to a further embodiment of the energy storage device, the fibers of at least one of the cathode layer, the anode layer, and the separator layer form a fabric. A fabric may include a woven or non-woven fabric. Thereby, on the one hand a high surface of the fibers may be provided within the layers whereby the electrically active surface of the electrodes is increased. On the other hand, fabrics improve mechanical stability of the energy storage device.

According to a further embodiment of the energy storage device, the electrolytic polymer matrix material of the cathode layer, the anode layer, and the separator layer may be made from the same polymer matrix material. That is, all fiber plies of the layers forming the energy storage device may be embedded in a matrix material having identical composition. This further eases ion transfer between the layers and also eases attaching the layers to one another.

According to one embodiment of the energy storage device, the electrolytic polymer matrix material of the cathode layer, the anode layer, and the separator layer may be a thermoset resin, for example an epoxy based resin or hybrid resin comprising an epoxy constituent. Generally, the matrix material includes an electrolyte so as to allow ion transfer between anode and cathode layer. In particular, the matrix material may comprise Li-ions.

In the following, advantageous embodiments of the method according to the third aspect of the invention are described. It should be understood that the method according to the third aspect may be used for manufacturing an energy storage device according to the first aspect. The method may be modified or adapted according to all variations and modifications described with respect to the energy storage device according to the first aspect and vice versa.

According to one embodiment, the method may comprise applying the carrier liquid to a first contact surface of the anode layer or the cathode layer, deposing the separator layer onto the first contact surface, applying the carrier liquid to a second contact surface of the separator layer, and deposing the remaining one of the anode layer and the cathode layer onto the second contact surface. Hence, the layered structure is built up layer by layer, wherein it can be started with the anode or cathode layer, and CNTs are provided to extend between and partially between the anode layer and the separator layer and between the separator layer and the cathode layer. This layerwise build up starting with anode or cathode layer provides the benefit that the lower most layer may remain at a support surface for the whole process with no need to turn or move it.

According to one embodiment, the method may comprise applying the carrier liquid to a first contact surface of the separator layer, deposing the cathode layer or the anode layer onto the first contact surface, applying the carrier liquid to a second contact surface of the separator layer, the second contact surface being oriented opposite to the first contact surface, and deposing the remaining one of the anode layer and the cathode layer onto the second contact surface.

According to a further embodiment of the method, the carrier liquid may be applied to the contact surface by a roller. The roller may be wetted with the carrier liquid and by rolling the roller over the contact surface, the carrier liquid is deposited onto the contact surface. The roller offers the advantage that the carrier liquid may be applied onto the contact surface under a specific pressure. Thereby penetration of the CNTs into the contact surface is further promoted. Moreover, spilling of the carrier liquid may be avoided. Thereby, even distribution is further improved which in turn improves ion transfer.

According to a further embodiment of the method, forming the layered structure includes automated tape laying (ATL) and/or automated fiber placement (AFP). In AFP pre-impregnated fiber mats are disposed onto a surface by aid of a roller. In ATL, a plurality of pre-impregnated fiber tapes are disposed along one another on a surface such that a continuous layer is formed. ATL and AFP require only few manual input and thus may be efficiently carried out automatically.

Within the present disclosure, carbon nanotubes (CNTs) are considered as allotropes of carbon with a cylindrical nanostructure. In particular, CNTs are cylindrically shaped tubes which walls consist of carbon atoms, wherein the carbon atoms are arranged in a hexagonal pattern in which each carbon atom chemically bonds with three further carbon atoms. In particular, the chemical bonding of nanotubes involves entirely sp2-hybrid carbon atoms. CNTs may comprise a diameter in the range between 0.4 nm and 200 nm, preferably between 5 nm and 150 nm. CNTs may for example comprise a length in a range between 1 µm to 3 mm.

Between the neighbouring layers of the energy storage device according to the invention, CNTs may be provided with a site density for example in a range between 1.0 x 10⁵ CNTs per mm² and 1.0 x 10⁹ CNTs per mm². Accordingly, the carrier liquid used in the method according to the invention may comprise a volume fraction of CNTs in range between 0.5 and 50 percent, in particular, the volume fraction may lie in a range between 0.5 and 5 percent.

With respect to directions and axes, in particular with respect to directions and axes concerning the extension or expanse of physical structures, within the scope of the present disclosure, an extent of an axis, a direction, or a structure "along" another axis, direction, or structure includes in particular that said axes, directions, or structures, in particular tangents which result at a particular site of the respective structures, enclose an angle which is smaller than 45 degrees, preferably smaller than 30 degrees and in particular preferable extend parallel to each other.

With respect to directions and axes, in particular with respect to directions and axes concerning the extension or expanse of physical structures, within the scope of the present disclosure, an extent of an axis, a direction, or a structure "crossways", "across", "cross", or "transverse" to another axis, direction, or structure includes in particular that said axes, directions, or structures, in particular tangents which result at a particular site of the respective structures, enclose an angle which is greater or equal than 45 degrees, preferably greater or equal than 60 degrees, and in particular preferable extend perpendicular to each other.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates an energy storage device according to an embodiment of the invention.
- Fig. 2: schematically illustrates an enlarged sectional view of the region where two adjacent layers contact one another of an energy storage device according to an embodiment of the invention.
- Fig. 3: schematically illustrates a carbon nanotube for use in one of the embodiments of the invention.
- Fig. 4: schematically illustrates a further enlarged view of a part of the region depicted in Fig. 2.
- Fig. 5: schematically illustrates a step of a method for manufacturing an energy storage device according to an embodiment of the invention.
- Fig. 6: schematically illustrates a detailed view of the region marked by reference letter Z in Fig. 5.
- Fig. 7: schematically illustrates a further step of the method for manufacturing an energy storage device according to an embodiment of the invention.
- Fig. 8: schematically illustrates an aircraft according to an embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

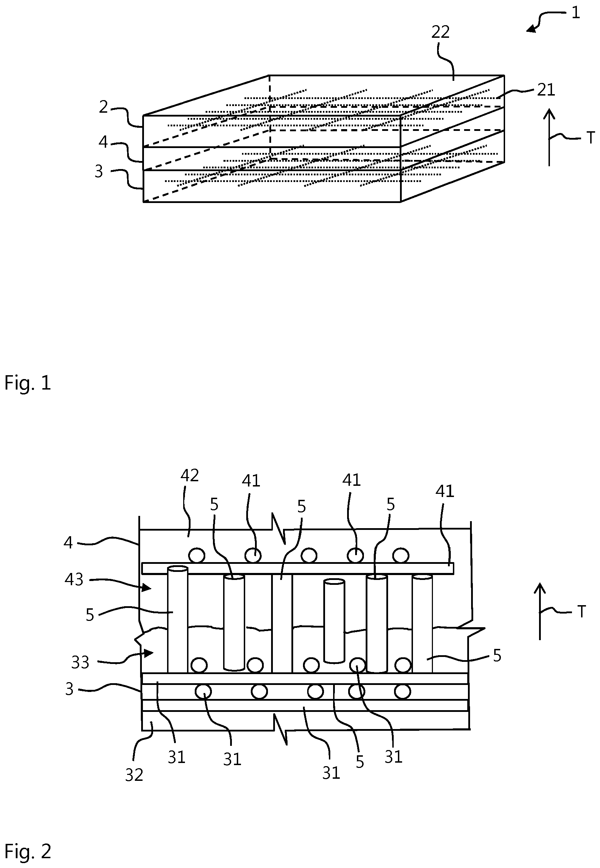

Fig. 1 illustrates an energy storage device 1 for storing electrical energy. The energy storage device 1 is rechargeable. For example, the energy storage device 1 may also be referred to as a battery, or supercapacitor, or supercapacitor with chemical pseudo capacitance, or ultracapacitor. The energy storage device 1 comprises a cathode layer 2, an anode layer 3, and a separator layer 4. As is shown for example in Fig. 2, the energy storage device 1 further comprises carbon nanotubes 5 which are abbreviated in the following as "CNTs".

As schematically shown in Fig. 1, the cathode layer 2 comprises at least one ply of carbon fibers 21 and an electrolytic polymer matrix material 22. The carbon fibers 21 are coated with a coating material (not shown) containing lithium(Li)-ions. For example, the coating material may be a lithium metal oxide or phosphate, for example LiFePO₄ or LiMnO₂. As is exemplary shown in Fig. 1 in a schematic manner, the carbon fibers 21 of the cathode layer 2 may form a woven fabric. Alternatively, the fibers may also be arranged so as to form a non-woven fabric or ply. The electrolytic polymer matrix material 22 encapsulates or embeds the fibers 21 of the cathode layer 2. The electrolytic polymer matrix material 22 may for example be a thermoset resin, e.g. an epoxy based resin.

The anode layer 3 comprises at least one ply of carbon fibers 31 and an electrolytic polymer matrix material 32. As is exemplary shown in Fig. 1 in a schematic manner, the carbon fibers 31 of the anode layer 3 may form a woven fabric. Alternatively, the carbon fibers 31 may also be arranged so as to form a non-woven fabric or ply. The electrolytic polymer matrix material 32 encapsulates or embeds the fibers 31 of the anode layer 3. The electrolytic polymer matrix material 32 may for example be a thermoset epoxy resin. Preferably, the electrolytic polymer matrix material 32 of the anode layer 3 is the same as the electrolytic polymer matrix material 22 of the cathode layer 2.

Fig. 1 further schematically shows the separator layer 4. The separator layer 4 comprises at least one ply of electrically insulating fibers 41 and an electrolytic polymer matrix material 42. For the sake of clarity, the fibers 41 of the separator layer 4 are not shown in Fig. 1. Similar as in the cathode layer 2 and in the anode layer 3, the fibers 41 of the separator layer 4 may form a woven or non-woven fabric or ply. For example, glass fibers may be used as the fibers 41 of the separator layer 4. The electrolytic polymer matrix material 42 encapsulates or embeds the fibers 41 of the separator layer 4. The electrolytic polymer matrix material 42 may for example be a thermoset epoxy resin. Preferably, the electrolytic polymer matrix material 42 of the separator layer 4 is the same as the electrolytic polymer matrix material 22 of the cathode layer 2 and/or as the electrolytic polymer matrix material 32 of the anode layer 3.

As can be seen in Fig. 1, the cathode layer 2, the anode layer 3, and the separator layer 4 each may be plate shaped. Generally, cathode layer 2, the anode layer 3, and the separator layer 4 each may spatially extend to a certain degree. The electrolytic behaviour of the polymer matrix materials 22, 32, 42 of the layers 2, 3, 4 may be achieved by Li-ions being contained within the matrix materials 22, 32, 42.

As is schematically illustrated in Fig. 1, the separator layer 4 is sandwiched between the cathode layer 2 and the anode layer 3. In particular, the separator layer 4 is arranged between the cathode layer 2 and the anode layer 3 with respect to a thickness direction T of the energy storage device 1. The cathode layer 2 performs the function of a positive electrode and may be provided with a current collector (not shown) being attached to surface of the cathode layer 2 that faces away from the separator layer 4. The anode layer 3 performs the function of a negative electrode and may also be provided with a current collector (not shown), if necessary. The separator layer 4 electrically insulates the anode layer 3 from the cathode layer 2 and allows transportation of ions between the electrodes. One advantage of this composite structure of the energy storage device 1 is that it comprises remarkable mechanical stiffness while allowing storage of electrical energy.

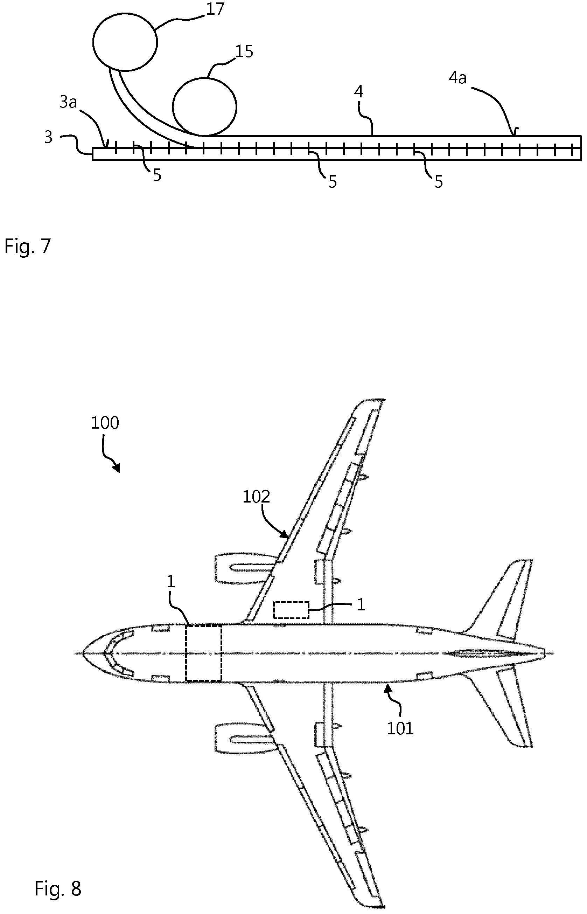

Fig. 8 exemplarily shows an aircraft 100. The energy storage device 1 as described herein may, for example, form part of a fuselage 101 or of a wing 102 of the aircraft 100. It will be appreciated that the energy storage device 1 may also be integrated to or may form other components of the aircraft 100.

As is exemplarily shown in Fig. 2 with reference to the separator layer 4 and the anode layer 3, the CNTs 5 may be arranged between the anode layer 3 and the separator layer 4 with respect to the thickness direction T. As schematically shown in Fig. 2, the CNTs 5 extend between and partly into the separator layer 4 and the anode layer 3. That is, a respective CNT 5 penetrates into the separator layer 4 and the anode layer 3. Although Fig. 2 generally shows the CNTs 5 to extend between and partly into the separator layer 4 and the anode layer 3, the CNTs 5 may generally may penetrate into two neighbouring layers of the energy storage device 1. Thus, the CNTs 5 may extend between and partly into the separator layer 4 and the cathode layer 2, or the CNTs 5 may extend between and partly into the separator layer 4 and the anode layer 3, or the CNTs 5 may extend between and partly into the separator layer 4 and the cathode layer 2 and the separator layer 4 and the anode layer 3.

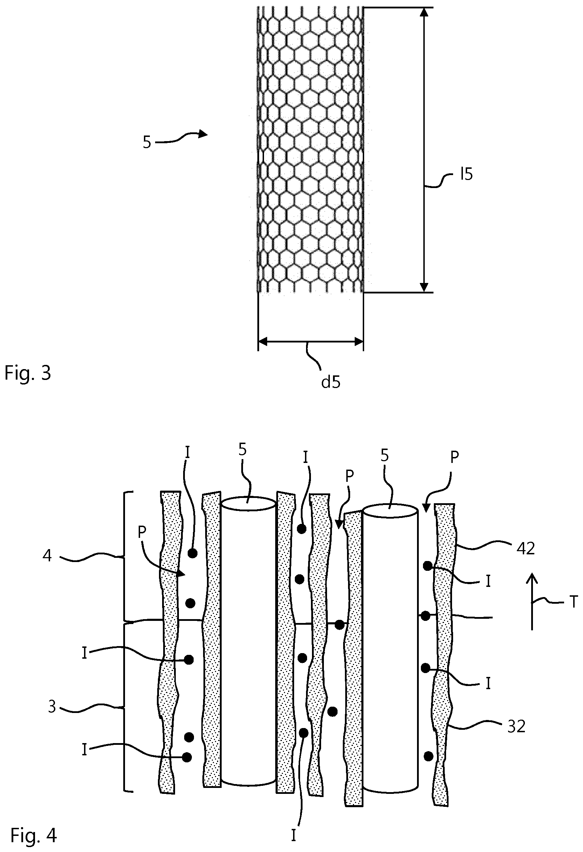

Fig. 3 schematically illustrates a CNT 5. The CNTs 5 are a cylindrically shaped tubes which walls consist of carbon atoms, wherein the carbon atoms are arranged in a hexagonal pattern in which each carbon atom chemically bonds with three further carbon atoms. In particular, the chemical bonding of nanotubes involves entirely sp2-hybrid carbon atoms. The CNTs 5 may comprise a diameter d5 in the range between 0.4 nm and 100 nm, preferably between 5 nm and 80 nm. The CNTs may for example comprise a length l5 in a range between 1 µm to 3 mm.

Referring back to Fig. 2, it is illustrated schematically that the CNTs 5 may in particular extend into in a side region 33 of the anode layer 3. Likewise, the CNTs 5 may in particular extend into in a side region (not shown) of the cathode layer 2. As is further illustrated in Fig. 2, the CNTs 5 alternatively or additionally also extend into in a side region 43 of the separator layer 4. The cathode and anode layers 2, 3 as well as the separator layer 4 comprise side regions 33, 43 that are devoid of fibers 21, 31, as is schematically shown in Fig. 2. The side regions 33, 43 encapsulate a fiber rich core region with respect to the thickness direction T. As shown in Fig. 2, the CNTs 5 may end in the core region of the separator layer 4 and/or of the anode layer 32 or likewise of the cathode layer (not shown in Fig. 2). As is illustrated in Fig. 2 the CNTs 5 with a first tip or end region may contact or partly overlap the fibers 41 of the separator layer 4 and/or with second tip or end region may partly overlap the carbon fibers 31 of the anode layer 3 or the carbon fibers 21 of the cathode layer 2 (not shown in Fig. 2).

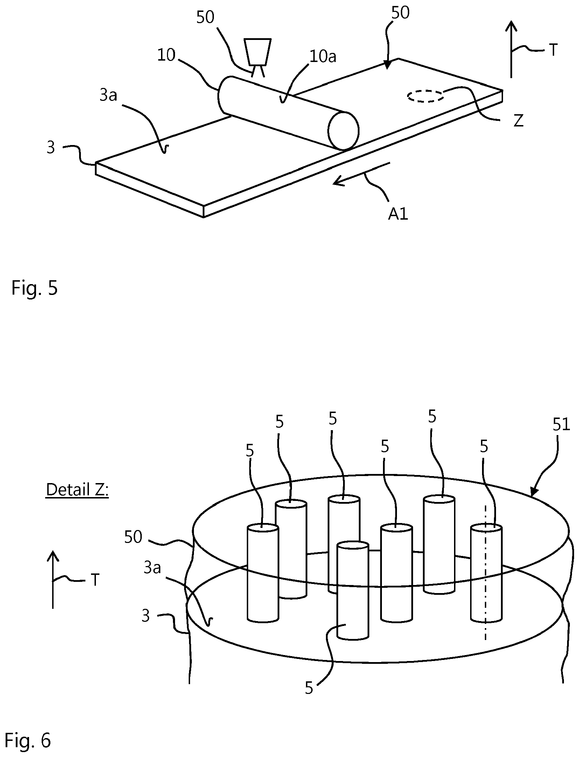

Fig. 2 further illustrates schematically the orientation of the CNTs 5. In particular, the CNTs 5 may be oriented transverse to the areal expanse of the separator layer 4. Generally, the CNTs 5 may be oriented along the thickness direction T of the energy storage device 1, that is, such that they extend in a direction defining a shortest distance between the cathode layer 2 and the anode layer 3. Optionally, the CNTs 5 may be oriented along one another, as is also shown in Fig. 2 and in Fig. 6 which will be explained in more detail below.

Fig. 4 schematically illustrates a micro structure of the polymer matrix material 31, 41 in the area around the CNTs 5. By penetrating into the separator layer 4 and the anode layer 3, the CNTs 5 cause the matrix material 31, 41 to form substantially straight, channel like paths of travel P where transport of Li-ions I can take place. Thereby, ion transport between the electrodes can be remarkably accelerated since the overall length of travel for the Li-ions is decreased. Thus, power density, that is, the rate at which energy can be accumulated or discharged from the energy storage device 1 is increased. The orientation of the CNTs 5 along the thickness direction and along or parallel to one another, as exemplarily shown in Figs. 2 and 5, further increases power density.

Figs. 5 to 7 schematically illustrate steps of a method for manufacturing an energy storage device 1. It should be understood that the method may be used for manufacturing the energy storage device 1 as described above. The method may be modified or adapted according to all variations and modifications described with respect to the energy storage device 1 and vice versa.

As schematically shown in Fig. 5, a carrier liquid 50 containing equally oriented CNTs 5 is applied to a contact surface 3a of the anode layer 3. The contact surface may also be formed by a surface of the cathode layer 2 or a surface 4a, 4b of the separator layer 4. In the following explanations, in order to omit repetitions, only to the contact surface 3a of the anode layer 3 is referred. It should be understood that the explanations related to the contact surface 3a of the anode layer 3 are valid in an analogous manner if the contact surface is formed by a surface 4a, 4b of the separator layer 4 or a surface of the cathode layer 2.

The carrier liquid 50 may for example be a so called VANTA carrier liquid, wherein "VANTA" is an abbreviation for the term "vertically aligned nanotube arrays". This type of carrier liquid 50 may be obtained by growing CNTs from catalyst particles on an even surface of a substrate. The CNTs grow randomly but soon crowd and interfere with the random directions of growth. This causes the CNTs to grow in a direction away from the substrate, yielding an array of CNTs extending perpendicular to the substrate. The array is freestanding or non-friable, due to entanglement and van der Waals interactions, and so the array can be released from the substrate by an appropriate solvent. Generally, the carrier liquid 50 may comprise an aqueous solvent, wherein the CNTs are dispersed or solubilized in said solvent.

As is shown by way of example in Fig. 5, the carrier liquid 50 may be applied to the contact surface 3a by a roller 10. As is schematically illustrated in Fig. 5, the carrier liquid 50 may be sprayed or poured to a surface 10a of the roller 10, wherein the roller 10 with its surface 10a is rolled along the contact surface 3a as indicated by arrow A1 in Fig. 5. Thereby the roller 10 transfers the carrier liquid 50 onto the contact surface 3a. As shown in further detail in Fig 6, a film 51 of aligned CNTs 5 that extend transverse to the contact surface 3a may efficiently be formed by aid of the roller 10 over the areal expanse of the anode layer 3.

As schematically shown in Fig. 7, after applying the carrier liquid 50 to the contact surface 3a of the anode layer 3, the separator layer 4 is disposed on the contact surface 3a of the anode layer 3. In particular, a first contact surface 4a of the separator layer 4 may be attached to the contact surface 3a of the anode layer 3. For example, an automated fiber placement (AFP) process may be employed. Fig. 7 schematically illustrates an AFP process comprising contacting the separator layer 4 with the contact surface 3a by aid of a roller 15 being moved along the contact surface 3a as illustrated by arrow A2. The separator layer 4 may be drawn from a storage roll 17. The separator layer 4 may further be provided in the form of a fiber mat that is pre-impregnated with the matrix material 42. By contacting the anode layer 3 and the separator layer 4, penetration of the CNTs 5 into the layers 3, 4 is promoted.

Subsequently, in an optional further step carrier liquid 50 may be applied to a second contact surface 4b of the separator layer 4, wherein the second contact surface 4b is oriented contrary to the first contact surface 4a of the separator layer 4 and, as shown in Fig. 7, faces away from the anode layer 3. For example, the step described with reference to Fig. 5 may be repeated at the second contact surface 4b. Subsequently, the cathode layer 2 is disposed onto the second contact surface 4b of the separator layer 4, for example by an AFP process as described above.

As has been shown with reference to Figs. 5 to 7, a layered structure has been formed, wherein the separator layer 4 is sandwiched between the cathode layer 2 and the anode layer 3, wherein the contact surface 3a contacts the separator layer 4 with the anode layer 3 and the second contact surface 4b of the separator layer 4 contacts the separator layer 4 with the cathode layer 2. The carbon nanotubes 5 extend between and partly into the separator layer 4 and the anode layer 3 and the separator layer 4 and the cathode layer 2.

Alternatively, the method may also be started with applying carrier liquid 50 to a surface of the cathode layer 2, followed by depositing the separator layer 4 thereon, optionally applying carrier liquid to the first contact surface 4a of the separator layer 4, and depositing the anode layer 3 onto the first contact surface 4a of the separator layer 4. In a further alternative method, the carrier liquid 50 may be applied to to a first contact surface 4a of the separator layer 4 first. Then, the cathode layer 2 or the anode layer 3 is placed onto the first contact surface 4a and carrier liquid 50 is applied to a second contact surface 4b of the separator layer 4, the second contact surface lying opposite to the first contact surface 4a. Finally, the remaining one of the anode layer 3 and the cathode layer 2 is disposed onto the second contact surface of the separator layer 4.

Thus, the method generally comprises forming a layered structure, wherein the separator layer 4 is sandwiched between the cathode layer 2 and the anode layer 3, wherein the contact surface 3a, 4a, 4b contacts the separator layer 4 with the anode layer 3 or contacts separator layer 4 with the cathode layer 2, and the carbon nanotubes 5 extend between and partly into the separator layer 4 and the anode layer 3 or the separator layer 4 and the cathode layer 2.

In a further step of the method, the electrolytic polymer matrix material 22, 32, 42 of the layers 2, 3, 4 is cured. For example, curing may involve exposing the layered structure to a specific curing temperature, for example by heating the layered structure to a specific curing temperature. Further, curing may involve application of pressure. Application of heat during the curing step advantageously causes the aqueous solvent of the carrier liquid 50 to evaporate from the layered structure.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the seat modules and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: energy storage device
- 2: cathode layer
- 3: anode layer
- 3a: contact surface of anode layer
- 4: separator layer
- 4a: first contact surface of separator layer
- 4b: second contact surface of separator layer
- 5: carbon nanotubes
- 10: roller
- 10a: surface of the roller
- 15: roller
- 17: storage roll
- 21: carbon fibers of the cathode layer
- 22: electrolytic polymer matrix material of cathode layer
- 31: carbon fibers of anode layer
- 32: electrolytic polymer matrix material of anode layer
- 33: side region
- 41: fibers of separator layer
- 42: electrolytic polymer matrix material of separator layer
- 50: carrier liquid
- 51: film
- 100: aircraft
- 101: fuselage
- 102: wing
- A1: arrow
- d5: diameter of carbon nanotubes
- I: Li-ion
- l5: length of carbon nanotubes
- P: path of travel
- T: thickness direction

## Claims

1. Energy storage device (1) for storing electrical energy, comprising:
a cathode layer (2) comprising at least one ply of carbon fibers (21), the carbon fibers (21) being coated with a Li-ion (I) containing coating and embedded in an electrolytic polymer matrix material (22);
an anode layer (3) comprising at least one ply of carbon fibers (31), the carbon fibers (31) being embedded in an electrolytic polymer matrix material (32);
a separator layer (4) comprising at least one ply of fibers (41), the fibers (41) being embedded in an electrolytic polymer matrix material (42), wherein the separator layer (4) is sandwiched between the cathode layer (2) and the anode layer (3); and
carbon nanotubes (5) extending between and partly into the separator layer (4) and the cathode layer (2), or the separator layer (4) and the anode layer (3), or the separator layer (4) and the cathode layer (2) and the separator layer (4) and the anode layer (3), wherein the carbon nanotubes (5) provide travel paths for the Li-ions (I) between the anode layer (3) and the cathode layer (2).

2. Energy storage device (1) according to claim 1, wherein the carbon nanotubes (5) extend into a side region (33) of the anode layer (3) or the cathode layer (2), wherein the side region (33) is devoid of fibers (21; 31).

3. Energy storage device (1) according to one of the claims 1 and 2, wherein the carbon nanotubes (5) extend into in a side region (43) of the separator layer (4), wherein the side region (43) is devoid of fibers (41).

4. Energy storage device (1) according to any one of the preceding claims,
wherein the carbon nanotubes (5) are oriented transverse to the separator layer (4).

5. Energy storage device (1) according to claim 4, wherein the carbon nanotubes (5) are oriented along one another.

6. Energy storage device (1) according to any one of the preceding claims,
wherein the fibers (41) of the separator layer (4) include glass fibers.

7. Energy storage device (1) according to any one of the preceding claims,
wherein the fibers (21; 31) of at least one of the cathode layer (2), the anode layer (3), and the separator layer (4) form a fabric.

8. Energy storage device (1) according to any one of the preceding claims,
wherein the electrolytic polymer matrix material (22; 32; 42) of the cathode layer (2), the anode layer (3), and the separator layer (4) is the same polymer matrix material.

9. Energy storage device (1) according to any one of the preceding claims,
wherein the electrolytic polymer matrix material (22; 32; 42) of the cathode layer (2), the anode layer (3), and the separator layer (4) is a thermoset resin.

10. Aircraft (100) comprising an energy storage device (1) according to any one of the preceding claims.

11. Method for manufacturing an energy storage device, comprising:
providing a cathode layer (2) comprising at least one ply of carbon fibers (21), the carbon fibers (21) being coated with a Li-ion (I) containing coating and embedded in an electrolytic polymer matrix material (22), an anode layer (3) comprising at least one ply of carbon fibers (31), the carbon fibers (31) being embedded in an electrolytic polymer matrix material (32), and a separator layer (4) comprising at least one ply of fibers (41), the fibers (41) being embedded in an electrolytic polymer matrix material (42);
applying a carrier liquid (50) containing equally oriented carbon nanotubes (5) to a contact surface (3a; 4a; 4b) of one of the anode layer (3), the cathode layer (2), and the separator layer (4);
forming a layered structure, wherein the separator layer (4) is sandwiched between the cathode layer (2) and the anode layer (3), wherein the contact surface (3a; 4a; 4b) contacts the separator layer (4) with the anode layer (3) or contacts separator layer (4) with the cathode layer (2), and wherein the carbon nanotubes (5) extend between and partly into the separator layer (4) and the anode layer (3) or the separator layer (4) and the cathode layer (2); wherein the carbon nanotubes (5) provide travel paths for the Li-ions (I) between the anode layer (3) and the cathode layer (2); and
curing the electrolytic polymer matrix material (22; 32; 42) of the layers (2; 3; 4).

12. Method according to claim 11, comprising:
applying the carrier liquid (50) to a first contact surface (3a) of the anode layer (3) or the cathode layer (2);
deposing the separator layer (4) onto the first contact surface (3a);
applying the carrier liquid (50) to a second contact surface (4b) of the separator layer (4); and
deposing the remaining one of the anode layer (3) and the cathode layer (2) onto the second contact surface (4b).

13. Method according to claim 11, comprising:
applying the carrier liquid (50) to a first contact surface (4a) of the separator layer (4);
deposing the cathode layer (2) or the anode layer (3) onto the first contact surface (4a);
applying the carrier liquid (50) to a second contact surface (4b) of the separator layer (4); and
deposing the remaining one of the anode layer (3) and the cathode layer (2) onto the second contact surface (4b).

14. Method according to any one of claims 11 to 13, wherein the carrier liquid (50) is applied to the contact surface (3a; 4a) by a roller (10).

15. Method according to any one of claims 11 to 14, wherein forming the layered structure includes one or both of automated tape laying and automated fiber placement.

## Patentansprüche

1. Energiespeichervorrichtung (1) zum Speichern elektrischer Energie, umfassend:
eine Kathodenschicht (2), die mindestens eine Lage aus Kohlenstofffasern (21) umfasst, wobei die Kohlenstofffasern (21) mit einer Li-Ionen (I) enthaltenden Beschichtung überzogen und in ein elektrolytisches Polymermatrixmaterial (22) eingebettet sind;
eine Anodenschicht (3), die mindestens eine Lage aus Kohlenstofffasern (31) umfasst, wobei die Kohlenstofffasern (31) in ein elektrolytisches Polymermatrixmaterial (32) eingebettet sind;
eine Separatorschicht (4), die mindestens eine Lage von Fasern (41) umfasst, wobei die Fasern (41) in ein elektrolytisches Polymermatrixmaterial (42) eingebettet sind, wobei die Separatorschicht (4) sandwichartig zwischen der Kathodenschicht (2) und der Anodenschicht (3) angeordnet ist; und
Kohlenstoff-Nanoröhren (5), die sich zwischen und teilweise in die Separatorschicht (4) und die Kathodenschicht (2) oder die Separatorschicht (4) und die Anodenschicht (3) oder die Separatorschicht (4) und die Kathodenschicht (2) und die Separatorschicht (4) und die Anodenschicht (3) erstrecken, wobei die Kohlenstoff-Nanoröhren (5) Bewegungspfade für die Li-Ionen (I) zwischen der Anodenschicht (3) und der Kathodenschicht (2) bereitstellen.

2. Energiespeichervorrichtung (1) nach Anspruch 1, wobei sich die Kohlenstoff-Nanoröhren (5) in einen Seitenbereich (33) der Anodenschicht (3) oder der Kathodenschicht (2) erstrecken, wobei der Seitenbereich (33) frei von Fasern (21; 31) ist.

3. Energiespeichervorrichtung (1) nach einem der Ansprüche 1 und 2, wobei die Kohlenstoff-Nanoröhren (5) in einen Seitenbereich (43) der Separatorschicht (4) hineinreichen, wobei der Seitenbereich (43) frei von Fasern (41) ist.

4. Energiespeichervorrichtung (1) nach einem der vorhergehenden Ansprüche, wobei die Kohlenstoff-Nanoröhren (5) quer zur Trennschicht (4) ausgerichtet sind.

5. Energiespeichervorrichtung (1) nach Anspruch 4, wobei die Kohlenstoff-Nanoröhrchen (5) aneinander ausgerichtet sind.

6. Energiespeichervorrichtung (1) nach einem der vorhergehenden Ansprüche, wobei die Fasern (41) der Separatorschicht (4) Glasfasern umfassen.

7. Energiespeichervorrichtung (1) nach einem der vorhergehenden Ansprüche, wobei die Fasern (21; 31) mindestens einer der Kathodenschicht (2), der Anodenschicht (3) und der Separatorschicht (4) ein Gewebe bilden.

8. Energiespeichervorrichtung (1) nach einem der vorhergehenden Ansprüche, wobei das elektrolytische Polymermatrixmaterial (22; 32; 42) der Kathodenschicht (2), der Anodenschicht (3) und der Separatorschicht (4) das gleiche Polymermatrixmaterial ist.

9. Energiespeichervorrichtung (1) nach einem der vorhergehenden Ansprüche, wobei das elektrolytische Polymermatrixmaterial (22; 32; 42) der Kathodenschicht (2), der Anodenschicht (3) und der Separatorschicht (4) ein duroplastisches Harz ist.

10. Luftfahrzeug (100) mit einer Energiespeichervorrichtung (1) nach einem der vorhergehenden Ansprüche.

11. Verfahren zur Herstellung einer Energiespeichervorrichtung, umfassend:
Bereitstellen einer Kathodenschicht (2), die mindestens eine Lage von Kohlenstofffasern (21) umfasst, wobei die Kohlenstofffasern (21) mit einer Li-Ionen (I) enthaltenden Beschichtung beschichtet und in ein elektrolytisches Polymermatrixmaterial (22) eingebettet sind, einer Anodenschicht (3), die mindestens eine Lage von Kohlenstofffasern (31) umfasst, wobei die Kohlenstofffasern (31) in ein elektrolytisches Polymermatrixmaterial (32) eingebettet sind, und eine Separatorschicht (4), die mindestens eine Lage von Fasern (41) umfasst, wobei die Fasern (41) in ein elektrolytisches Polymermatrixmaterial (42) eingebettet sind;
Aufbringen einer Trägerflüssigkeit (50), die gleichmäßig orientierte Kohlenstoff-Nanoröhren (5) enthält, auf eine Kontaktfläche (3a; 4a; 4b) der Anodenschicht (3), der Kathodenschicht (2) oder der Separatorschicht (4);
Bilden einer Schichtstruktur, wobei die Separatorschicht (4) zwischen der Kathodenschicht (2) und der Anodenschicht (3) angeordnet ist, wobei die Kontaktfläche (3a; 4a; 4b) die Separatorschicht (4) mit der Anodenschicht (3) kontaktiert oder die Separatorschicht (4) mit der Kathodenschicht (2) kontaktiert, und wobei die Kohlenstoff-Nanoröhren (5) sich zwischen und teilweise in die Separatorschicht (4) und die Anodenschicht (3) oder die Separatorschicht (4) und die Kathodenschicht (2) erstrecken; wobei die Kohlenstoff-Nanoröhren (5) Bewegungswege für die Li-Ionen (I) zwischen der Anodenschicht (3) und der Kathodenschicht (2) bereitstellen; und
Aushärten des elektrolytischen Polymermatrixmaterials (22; 32; 42) der Schichten (2; 3; 4).

12. Verfahren nach Anspruch 11, umfassend:
Aufbringen der Trägerflüssigkeit (50) auf eine erste Kontaktfläche (3a) der Anodenschicht (3) oder der Kathodenschicht (2);
Aufbringen der Separatorschicht (4) auf die erste Kontaktfläche (3a); Aufbringen der Trägerflüssigkeit (50) auf eine zweite Kontaktfläche (4b) der Separatorschicht (4); und
Aufbringen der verbleibenden Anodenschicht (3) oder der Kathodenschicht (2) auf die zweite Kontaktfläche (4b).

13. Verfahren nach Anspruch 11, umfassend:
Aufbringen der Trägerflüssigkeit (50) auf eine erste Kontaktfläche (4a) der Separatorschicht (4);
Aufbringen der Kathodenschicht (2) oder der Anodenschicht (3) auf die erste Kontaktfläche (4a);
Aufbringen der Trägerflüssigkeit (50) auf eine zweite Kontaktfläche (4b) der Separatorschicht (4); und
Aufbringen der verbleibenden Anodenschicht (3) oder der Kathodenschicht (2) auf die zweite Kontaktfläche (4b).

14. Verfahren nach einem der Ansprüche 11 bis 13, wobei die Trägerflüssigkeit (50) mittels einer Walze (10) auf die Kontaktfläche (3a; 4a) aufgebracht wird.

15. Verfahren nach einem der Ansprüche 11 bis 14, bei dem die Bildung der Schichtstruktur eine oder beide Maßnahmen, d. h. automatisches Verlegen von Bändern und automatisches Ablegen von Fasern, umfasst.

## Revendications

1. Accumulateur d'énergie (1) pour stocker de l'énergie électrique, comprenant:
une couche cathode (2) comprenant au moins une couche de fibres de carbone (21), lesdites fibres de carbone (21) étant revêtues d'un revêtement contenant des ions Li (I) et étant noyées dans un matériau de matrice polymère électrolytique (22);
une couche d'anode (3) comprenant au moins une couche de fibres de carbone (31), les fibres de carbone (31) étant noyées dans un matériau de matrice polymère électrolytique (32);
une couche de séparateur (4) comprenant au moins une couche de fibres (41), lesdites fibres (41) étant noyées dans un matériau de matrice polymère électrolytique (42), ladite couche séparatrice (4) étant prise en sandwich entre ladite couche de cathode (2) et ladite couche d'anode (3); et
nanotubes de carbone (5) s'étendant entre et partiellement dans la couche de séparateur (4) et la couche de cathode (2) ou la couche de séparateur (4) et la couche d'anode (3) ou la couche de séparateur (4) et la couche de cathode (2) et la couche de séparateur (4) et la couche d'anode (3), les nanotubes de carbone (5) fournissant des chemins de déplacement pour les ions Li (I) entre la couche d'anode (3) et la couche de cathode (2).

2. Accumulateur d'énergie (1) selon la revendication 1, dans lequel les nanotubes de carbone (5) s'étendent dans une région latérale (33) de la couche anodique (3) ou de la couche cathode (2), la région latérale (33) étant exempte de fibres (21 ; 31).

3. Accumulateur d'énergie (1) selon l'une des revendications 1 et 2, dans lequel les nanotubes de carbone (5) s'étendent dans une zone latérale (43) de la couche de séparateur (4), la zone latérale (43) étant exempte de fibres (41).

4. Accumulateur d'énergie (1) selon l'une des revendications précédentes, dans lequel les nanotubes de carbone (5) sont orientés transversalement à la couche de séparateur (4).

5. Accumulateur d'énergie (1) selon la revendication 4, dans lequel les nanotubes de carbone (5) sont alignés les uns avec les autres.

6. Accumulateur d'énergie (1) selon l'une quelconque des revendications précédentes, dans lequel les fibres (41) de la couche de séparateur (4) comprennent des fibres de verre.

7. Accumulateur d'énergie (1) selon l'une quelconque des revendications précédentes, dans lequel les fibres (21 ; 31) d'au moins une couche parmi la couche de cathode (2), la couche d'anode (3) et la couche de séparateur (4) forment un tissu.

8. Accumulateur d'énergie (1) selon l'une quelconque des revendications précédentes, dans lequel le matériau de matrice polymère électrolytique (22 ; 32 ; 42) de la couche de cathode (2), de la couche d'anode (3) et de la couche de séparateur (4) est le même matériau de matrice polymère.

9. Accumulateur d'énergie (1) selon l'une quelconque des revendications précédentes, dans lequel le matériau de matrice polymère électrolytique (22 ; 32 ; 42) de la couche de cathode (2), de la couche d'anode (3) et de la couche de séparateur (4) est une résine thermodurcissable.

10. Aéronef (100) comportant une accumulateur d'énergie (1) selon l'une quelconque des revendications précédentes.

11. Procédé de fabrication d'une accumulateur d'énergie, comprenant:
fournir une couche de cathode (2) comprenant au moins une couche de fibres de carbone (21), lesdites fibres de carbone (21) étant revêtues d'un revêtement contenant des ions Li (I) et étant noyées dans un matériau de matrice polymère électrolytique (22), une couche d'anode (3), comprenant au moins une couche de fibres de carbone (31), lesdites fibres de carbone (31) étant noyées dans un matériau de matrice polymère électrolytique (32), et une couche de séparateur (4) comprenant au moins une couche de fibres (41), lesdites fibres (41) étant noyées dans un matériau de matrice polymère électrolytique (42); l'application d'un liquide porteur (50) contenant des nanotubes de carbone (5) orientés uniformément sur une surface de contact (3a ; 4a ; 4b) de la couche d'anode (3), de la couche de cathode (2) ou de la couche de séparateur (4); former une structure stratifiée, la couche séparatrice (4) étant disposée entre la couche de cathode (2) et la couche d'anode (3), la surface de contact (3a ; 4a ; 4b) met en contact la couche séparatrice (4) avec la couche d'anode (3) ou met en contact la couche de séparateur (4) avec la couche de cathode (2), et dans lequel les nanotubes de carbone (5) s'étendent entre et partiellement dans la couche de séparateur (4) et la couche d'anode (3) ou la couche de séparateur (4) et la couche de cathode (2) ; dans lequel les nanotubes de carbone (5) fournissent des voies de déplacement pour les ions Li (I) entre la couche d'anode (3) et la couche de cathode (2); et
durcissement du matériau de matrice polymère électrolytique (22 ; 32 ; 42) des couches (2 ; 3 ; 4).

12. Procédé selon la revendication 11, comprenant:
l'application du liquide porteur (50) sur une première surface de contact (3a) de la couche d'anode (3) ou de la couche de cathode (2);
l'application de la couche de séparateur (4) sur la première surface de contact (3a) ; l'application du liquide porteur (50) sur une deuxième surface de contact (4b) de la couche de séparateur (4) ; et
l'application de la couche d'anode restante (3) ou de la couche de cathode (2) sur la deuxième surface de contact (4b).

13. Procédé selon la revendication 11, comprenant:
l'application du liquide porteur (50) sur une première surface de contact (4a) de la couche de séparateur (4) ;
l'application de la couche de cathode (2) ou de la couche d'anode (3) sur la première surface de contact (4a);
l'application du liquide porteur (50) sur une deuxième surface de contact (4b) de la couche de séparateur (4) ; et
l'application de la couche d'anode restante (3) ou de la couche de cathode (2) sur la deuxième surface de contact (4b).

14. Procédé selon l'une quelconque des revendications 11 à 13, dans lequel le liquide porteur (50) est appliqué sur la surface de contact (3a ; 4a) au moyen d'un rouleau (10).

15. Procédé selon l'une quelconque des revendications 11 à 14, dans lequel la formation de la structure stratifiée comprend l'une ou l'autre ou les deux opérations, à savoir la pose automatique de rubans et la dépose automatique de fibres.
